Europäisches Patentamt

European Patent Office

Office européen des brevets

(19)

(11) Publication number: **0 018 734**
**B1**

(12) **EUROPEAN PATENT SPECIFICATION**

(45) Date of publication of patent specification: **19.10.83**

(51) Int. Cl.³: **B 01 D 13/00** //A61M1/03

(21) Application number: **80301143.6**

(22) Date of filing: **09.04.80**

(54) **Mass transfer device and method of making the same.**

(30) Priority: **09.04.79 US 28238**

(43) Date of publication of application:
**12.11.80 Bulletin 80/23**

(45) Publication of the grant of the patent:
**19.10.83 Bulletin 83/42**

(84) Designated Contracting States:
**AT BE CH DE FR GB IT LI LU NL SE**

(56) References cited:
**DE - A - 2 721 444**
**DE - A - 2 900 603**
**US - A - 3 503 515**
**US - A - 4 140 637**

(73) Proprietor: **Brumfield, Robert Clarence**
**42 Lakeshore Terrace**
**Incline Village Nevada, 89450 (US)**

(72) Inventor: **Brumfield, Robert Clarence**
**42 Lakeshore Terrace**
**Incline Village Nevada, 89450 (US)**

(74) Representative: **Beresford, Keith Denis Lewis et al,**
**R.G.C. Jenkins & Co. 12-15, Fetter Lane**
**London EC4A 1PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Mass transfer device and method of making the same

This invention relates to mass transfer devices such as blood dialysis cartridges.

Mass transfer devices such as blood dialysis cartridges or the like are conventionally made from bundles of parallel semipermeable hollow fibers through which blood is caused to flow while the fibers are immersed in dialysate. A common problem of these devices is the tendency of the fibers to bunch or mat together so that the free flow of dialysate over the entire surface of the fibers is substantially impaired. The resulting flow of mass transfer efficiency slows down the dialysis process and is economically wasteful.

It has been proposed (U.S. Patents No. 3,422,008 and 3,794,468) to wind hollow fibers on a mandrel to form a dialysis cartridge. This method alleviates the bunching problem to some degree. However, the hollow semipermeable fibers used in blood dialysis equipment are quite delicate and cannot be wound with a great deal of tension for fear of damage. They also tend to be limp and floppy when in use. Consequently, the dialysis fibers have considerable freedom of movement and are still somewhat subject to bunching under the fluid flow forces of the dialysate. In addition, when the hollow fibers in the prior art devices bunch in a radial direction with respect to the mandrel, there is a danger that they may pinch each other at crossovers.

As suggested by the aforesaid U.S. patent 3,422,008, it is desirable to wind a plurality of cartridges from continuous fibers on a single mandrel and to provide "tubesheets" at intervals along the mandrel where cuts can subsequently be made to form manifold surfaces at which the interior of the hollow fibers is accessible.

Experience has shown, however, that the "tubesheets" applied during the winding make a poor bond with the fibers, mostly because the fibers as wound are oily and wet. It is therefore not practical to use "tubesheets" in the final dialysis cartridge.

In addition, the prior art blood dialysis devices tend to be thrombogenic, i.e. they tend to cause blood clotting which must be counteracted by medication, and which in a significant number of cases makes the patient intolerant of this type of equipment.

The present invention provides in one aspect a method of making a mass transfer device by winding fibers onto a mandrel to form a multi-layer structure in which the fibers of each layer are disposed at an angle to the fibers of the next adjacent layer, characterised in that at least one set of said fibers is wound onto the mandrel each set consisting of a solid spacer fiber and at least one hollow semipermeable fiber no thicker than said solid fiber and parallel to said solid fiber.

In another aspect the invention provides a mass transfer device made up of successive layers of fibers, the fibers of each layer being parallel to one another but disposed at an angle to the fibers of the next adjacent layer, characterised in that each layer consists of at least one set of fibers, each set consisting of at least one solid spacer fiber and at least one hollow semipermeable fiber no thicker than said solid fiber and parallel thereto.

If the fibers are wound with sufficient tension to cause successive layers to lie firmly against each other, this arrangement results in the formation of a cage-like structure with continuous protective channels defined by the solid fibers. The smaller hollow fibers lie loosely in those channel and are supported by the solid fibers of the layer below them to prevent them from pinching the hollow fibers of the layer below.

As a practical matter, the fragile nature of the hollow fibers make it advisable to wind the fibers rather loosely. When this is done, the solid fibers of successive layers become spaced from one another and no longer form a solid cage. However, although the hollow fibers can then move beyond the confines of the channel in which they are supposed to lie, the spacer fibers generally still tend to prevent them from wandering very far out of line. In this manner, the spacer fibers effectively prevent bunching of the hollow fibers, both radially and tangentially.

Inasmuch as it is desirable, when winding dialysis cartridges, to produce a plurality of cartridges in a single winding, beads of resinous adhesive are preferably deposited on the mandrel during the winding operation, each bead being spaced from the next by one cartridge length. These beads harden into solid temporary anchor plates similar to the "tubesheets" of U.S. patent 3,422,008 which hold the fibers in place, and through which the wound mandrel can eventually be cut to form individual temporary cartridges which are strong enough to withstand the handling involved in washing and drying the fibers (to remove inherent moisture and organic oil preservative introduced into the fibers during manufacture).

Following the assembly of the temporary cartridges into appropriate housings by a conventional final-potting process (in which the potting material forms a solid, fluid-tight bond with the dry fibers), the temporary anchor plates are cut off and discarded, and a cut is made through the final potting to form a manifold surface at which the interior of the hollow fibers is accessible without significant leakage.

The problem of thrombogenesis can be largely prevented by rounding the edges of the fiber walls where they protrude through the manifold surface, to eliminate microscopic burrs or sharp irregularities and debris on the manifold surface on which clotting can start. This is achieved in a preferred embodiment of the invention by depositing onto the manifold surface a meniscus-forming solution, preferably of polyurethane, which is then cured to form a thin, smooth, lacquer-like layer which smooths out any microscopic surface irregularities but does not clog the open ends of the hollow fibers.

Preferred embodiments of the invention will now be described in detail with reference to the accompanying drawings wherein:

Fig. 1 is a schematic perspective view, partly cut away, showing the winding operations involved in the manufacture of blood dialysis cartridges in accordance with a preferred embodiment of the invention;

Fig. 2 is an axial section along line 2—2 of Fig 1;

Fig. 3 is an elevational view, partly in section, showing the final potting step;

Fig. 4 is an enlarged vertical section of a portion of Fig. 3 along line 4—4;

Fig. 5 is a schematic elevational view illustrating the manifold surface treatment;

Fig. 6 is an enlarged slice-type vertical section of a portion of the manifold surface following treatment, as indicated by line 6—6 of Fig. 5; and

Fig. 7 is an enlarged view of the fiber pattern laid down by the winding apparatus of Fig. 1.

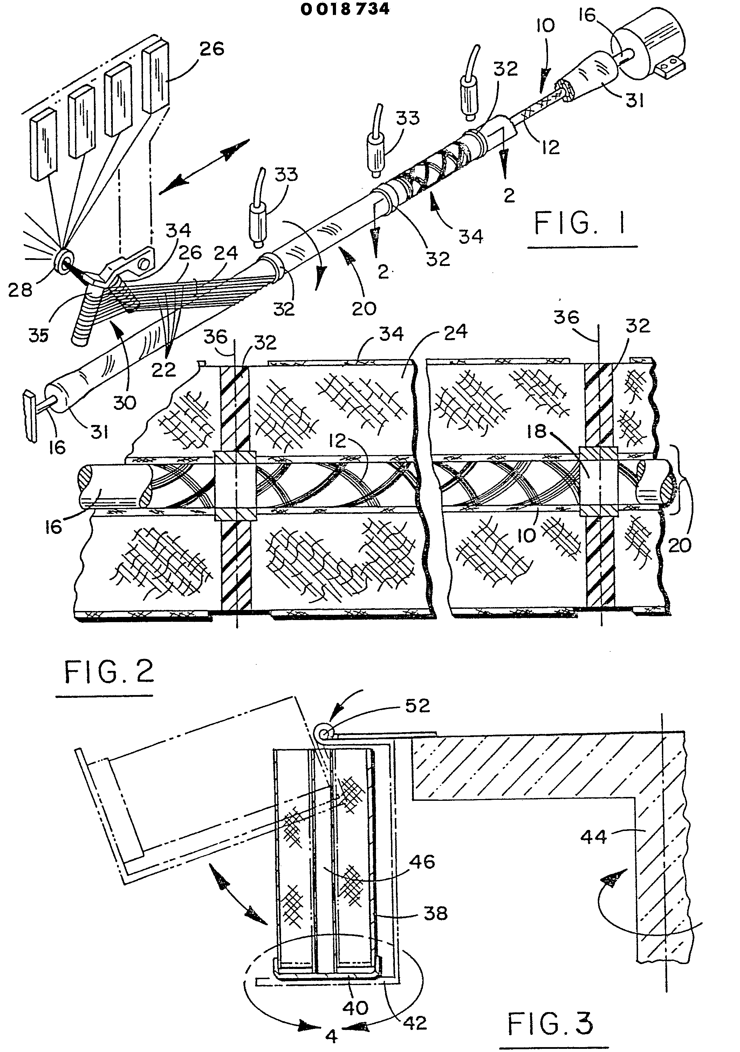

In accordance with a preferred embodiment of the invention, an apertured basket-weave core 10 is first formed in accordance with any well-known commercial technique, as for example by molding or by passing a ribbon 12 of Dacron fibers or other suitable material through an epoxy bath (not shown) and winding it on a winding stick 16 in the criss-cross pattern best illustrated in Fig. 2 to a thickness of about one millimeter. For the purpose of this invention, the rigid basket-weave core 10 is used in sections slightly shorter than the eventual length of a finished blood dialysis cartridge.

The cut sections of core 10 are now slipped back onto winding stick 16 (Fig. 2), but this time the core sections 10 are separated from one another by plastic spacers 18 of the same inside diameter but preferably somewhat greater outside diameter. The winding stick 16, core sections 10, and spacers 18 together form a mandrel 20 onto which the hollow semipermeable dialysis fibers 22 can be wound.

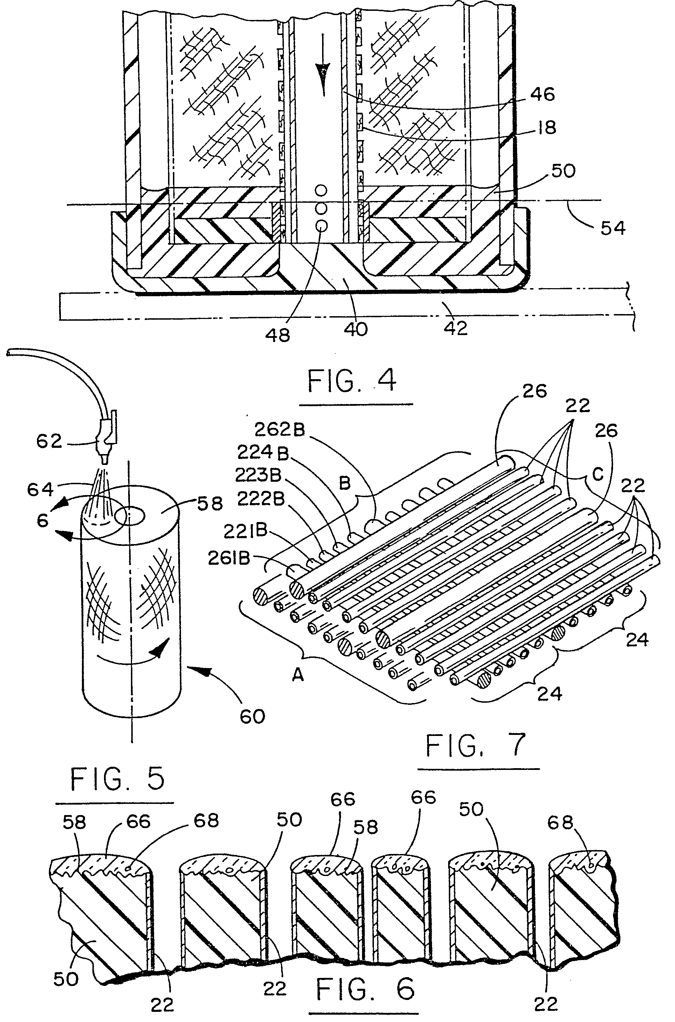

As best shown in Figs. 1 and 7, one or more sets 24 of fibers, each consisting of a thick, solid spacer fiber 26 and one or more hollow dialysis fibers 22 are wound side-by-side onto the mandrel 20 of Fig. 2. Any conventional technique for laying down the fiber sets 24 in the pattern shown in detail in Fig. 7 may be used. As an example, the individual fibers may be brought from creels 26 (Fig. 1) through a feed eye 28 which is mounted for reciprocating lengthwise movement along the mandrel 20. Between the feed eye 28 and the mandrel 20, the fibers are drawn through a comb 30 extending bewteen a pair of inclined, generally cylindrical guides 34, 35. The guides 34, 35 in conjunction with the comb 30, assure that the individual fibers of fiber strands 24 are laid down on the mandrel 20 parallel to each other and properly spaced from one another.

The fiber pattern produced by the foregoing method is illustrated in an enlarged scale in Fig. 7. It will be noted that adjacent spacer fibers 261B, 262B of the middle layer B in Fig. 7 form a protective channel between them in which the smaller (or at least no thicker), delicate dialysis fibers 221B, 222B, 223B and 224B can lie without fear of being pinched by the crossing fibers of layers A and C.

The spacer fibers 26 have an additional function regardless of whether or not the fiber sets 24 are tightly wound. The spacer fibers 26 are preferably made of a relatively stiff, chemically inert material such as nylon, and their diameter may be about (e.g.) 300 micrometers. By contrast the dialysis fibers 22 are typically made of high-purity cellulose with an outside diameter about 200 microns, which makes them floppy and not very straight. Because they cannot be wound very tightly, they have considerable freedom of lateral movement in the absence of spacer fibers 26, and they tend to bunch together when dialysate is caused to flow across them. This bunching, in turn, substantially reduces their mass transfer efficiency and impedes the dialysis process.

The provision of spacer fibers 26 in accordance with this invention tends to restrict lateral movement of the dialysis fibers 22 even when the fiber sets 24 are rather loosely wound. The dialysis fibers 22 tend to stay substantially within the channels defined by adjacent spacer fibers 26, and detrimental bunching of the dialysis fibers 22 is thereby eliminated or at least substantially reduced.

The winding method shown in Fig. 1 forms waste portions 31 of significant length at each end of the mandrel 20 where the winding direction of the fibers is reversed at the end of each pass of the feed eye 28. It is therefore economically necessary to wind a substantial number of cartridges on a single mandrel to keep the percentage of waste within tolerable limits.

To this end, beads 32 of a hardenable liquid resin such as epoxy are applied to the fiber sets 24 from guns 33 at spaced locations along the mandrel 20 as they are wound. The locations of beads 32 coincide with the locations of spacers 18 along mandrel 20. The epoxy beads 32 adhere to the spacers 18 and to the fibers, and as the beads 32 harden, they form solid annular anchor plates which firmly secure the fibers 22 and 26 in fixed positions at spaced intervals along the mandrel 20. However, the anchor plates do not, and are not intended to form fluid-tight bonds with the fibers wound on the mandrel. Consequently, as pointed out hereinafter they cannot serve as manifolds in the finished cartridge.

When the desired number of winding passes have been made, a flexible basket-weave retaining net 34 (Fig. 1) may be wound over the fibers between the beads 32, using a Dacron or other chemically inert ribbon coated with just enough epoxy to cause successive layers of ribbon to stick to each other without becoming rigid.

With the anchor plates 32 having hardened, the mandrel 20 with the fibers wound thereon is now removed from the winding stick 16, and cuts are made along lines 36 (Fig. 2) to separate the individual cartridges. The annular anchor plates 32, after cutting, co-act with the spacers 18 and the core sections 10 to form a sufficiently rigid temporary cartridge structure to allow the partly completed cartridges to be handled for washing, drying and storage.

Because of the fact that the anchor plates 32 do not bond sufficiently well to the unwashed and undried fibers of sets 24, during the winding process, they cannot be used to provide a fluid-tight seal between the interior of the finished cartridge and the blood manifold (not shown) with which the interior of the hollow fibers 22 communicates in the finished device. Consequently, a final-potting step has to be performed to assemble the temporary cartridge assembly with the outer housing 38 of the finished cartridge after the fibers have been washed and dried.

This may be done in any convenient way, but in the preferred embodiment of the invention, as illustrated in Figs. 3 and 4, the temporary cartridge assembly is placed, one end at a time, into a mold 40 attached to the cradle 42 of a centrifuge 44. A riser tube 46 with openings 48 at its lower end is placed into the core 18, and an appropriate amount of a conventional polyurethane potting compound 50 (Fig. 4) is poured into the tube 46.

The centrifuge 44 is then turned on and the resulting centrifugal force swings cradle 42 about hinge 52 to a horizontal position. At the same time, the centrifugal force evenly distributes the potting compound 50 over the lower (now outer) end of the cartridge to permanently anchor the fibers and form a fluid-tight seal around the fibers and with the outer housing 38.

After the final potting operation has been repeated for the other end of the cartridge, and the ends of the cartridge have been cut off along line 54 (Fig. 4) to remove and discard the now useless anchor plates 32, the cartridge is ready for assembly, in a conventional manner, into a dialysis unit (not shown).

As previously stated herein, it has been observed that cut fiber dialysis cartridges tend to produce thrombogenesis in the patient. In the dialysis cartridge illustrated, this problem is overcome by rounding the microscopic sharp edges or burrs left by the cutting operation at the end of the hollow dialysis fibers 22 where they protrude from the manifold surface 58 (Fig. 6).

Referring to Figs. 5 and 6, the manifold surface 58 of potting compound 50 is made non-thrombogenic by the process illustrated. As shown in Fig. 5, the cartridge 60 is slowly rotated for two or three revolutions under a fogging nozzle 62 which deposits an extremely fine mist (e.g. 10—20 micron droplet size) of polyurethane solution 64 (in the preferred embodiment), a solution consisting of 8% by weight Estane 5715 manufactured by B. F. Goodrich, 42% by weight of cellulose acetate, and 50% by weight of methyl ethyl ketone is used to advantage) onto the surface 58. The surface tension of the polyurethane solution causes it to form a meniscus 66 (Fig. 6) which covers any sharp edges of the dialysis fibers 22 without penetrating excessively into the interior of the fibers. The meniscus 66 is preferably cured into a hard, smooth surface similar to a lacquer by the application of warm, dry air and exposure for a few minutes to an infrared heat lamp.

In addition to rounding the entrances to the hollow interior of fibers 22, the cured polyurethane solution smooths the surface 58 and encapsulates any snags or debris 68 from the cutting process that may still be present after the conventional cleaning of the surface 58 following the cutting step.

The range of polyurethane content of the solution which can be used for the purposes of this invention is determined by the fact that lower percentages of Estane, though feasible, are increasingly wasteful of solvent and spraying time, and that an Estane content of 10% or more by weight tends to make the solution viscous to form a satisfactory meniscus, whereupon the hollow fiber ends start to plug.

The choice of solvent is, of course, not limited to the above-mentioned solvents, as the solvents act only as a volatile carrier. Consequently, any medically acceptable volatile solvent compatible with the polyurethane could be used. Other types of varnish which adhere to the fibers and header material can be used provided the surface produced is relatively non-thrombogenic.

## Claims

1. A method of making a mass transfer device by winding fibers onto a mandrel to form a multi-layer structure (A, B, C) in which the fibers of each layer are disposed at an angle to the fibers of the next adjacent layer, characterised in that at least one set (24) of said fibers is wound onto the mandrel each set consisting of a solid spacer fiber (26) and at least one hollow semipermeable fiber (22) no thicker than said solid spacer fiber and parallel to said solid spacer fiber.

2. A method according to Claim 1 on which said hollow semipermeable fibers (22) are thinner than said solid fibers (26).

3. A method according to Claim 1 or Claim 2 characterised in that a plurality of said sets of fibers (24) are simultaneously laid down in parallel relation to each other.

4. A method according to any preceding claim characterised in that beads of a hardenable liquid material are deposited at intervals along said mandrel, to harden and form anchor plates (32), said anchor plates being cut after hardening to form individual temporary cartridges to facilitate washing and drying.

5. A method according to Claim 4, further characterised in that said hardenable liquid material is a resin.

6. A method according to any preceding claim which includes the steps of casting a final-potting manifold (50) around the ends of the hollow semi-permeable fibers (22), cutting said final potting to form a manifold surface (58), and treating said manifold surface to round the ends of said fibers protruding through said manifold surface.

7. A method according to Claim 6, characterised in that a hardenable, meniscus-forming solution is applied to said manifold surface (58) after cutting and is cured into a smooth, hard coating.

8. A method according to Claim 7, characterised in that said meniscus-forming solution is a polyurethane solution.

9. A method according to Claim 8, characterised in that said polyurethane solution contains not more than 10% by weight of polyurethane and is applied to said manifold surface (58) in a fine fogging spray (64).

10. A method according to Claim 9, characterised in that said polyurethane solution consists of about 8% by weight of polyurethane and about 92% by weight of volatile solvents, and in which the droplet size of said spray (64) is in the range of 10—20 micrometers.

11. A mass transfer device made up of successive layers (A, B, C) of fibers, the fibers of each layer being parallel to one another but disposed at an angle to the fibers of the next adjacent layer, characterised in that each layer consists of at least one set of fibers (24), each set consisting of at least one solid spacer fiber (26) and at least one hollow semipermeable fiber (22) no thicker than said solid fiber and parallel thereto.

12. A mass transfer device according to Claim 11, in which said hollow semipermeable fibers (22) are thinner than said solid fibers (26).

13. A mass transfer device according to Claim 11 or Claim 12, further characterised in that each said set (24) consists of one solid fiber (26) and a plurality of hollow fibers (22).

14. A method of making a blood dialysis cartridge, comprising the steps of:

a) winding onto an apertured hollow mandrel (20) sets of fibers (24), each said set including a solid spacer fiber (26) and at least one hollow dialysis fiber (22) generally parallel thereto;

b) applying to said fibers, during the winding thereof, a hardenable adhesive material (32) adapted to hold said fibers in a fixed position at spaced locations along said mandrel;

c) allowing said adhesive material to harden;

d) cutting through said hardened adhesive material at said spaced locations (36) to form individual temporary cartridges;

e) final-potting the ends of said temporary cartridges to fit into a housing in sealing relationship;

f) cutting through said final-potted ends to remove said adhesive material and expose the ends of said fibers in a manifold surface (58); and

g) treating the exposed ends of said fibers and said manifold surface with a meniscus-forming hardenable substance to produce a smooth non-thrombogenic surface (66) on said fiber ends (68) and manifold.

15. A method according to Claim 14, in which said final potting is done centrifugally.

**Patentansprüche**

1. Verfahren zur Herstellung einer Stoffaustausch-Vorrichtung, bei dem Fasern auf einen Wickelkern zur Bildung eines Mehrschichtaufbaus (A, B, C) aufgewickelt werden, wobei die Fasern jeder Schicht in einem Winkel zu den Fasern der nächsten benachbarten Schicht angeordnet werden, dadurch gekennzeichnet, daß wenigstens ein Satz (24) der Fasern auf den Wickelkern aufgewickelt wird, wobei jeder Satz aus einer Abstandhalter-Massivfaser (26) und wenigstens einer semipermeablen Hohlfaser (22) besteht, die nicht dicker ist als die Abstandhalter-Massivfaser und parallel zu der Abstandhalter-Massivfaser angeordnet ist.

2. Verfahren nach Anspruch 1, dadurch gekennzeichnet, daß die semipermeablen Hohlfasern (22) dünner sind als die Massivfasern (26).

3. Verfahren nach Anspruch 1 oder 2, dadurch gekennzeichnet, daß eine Vielzahl von Sätzen der Fasern (24) gleichzeitig in paralleler Beziehung zueinander aufgelegt wird.

4. Verfahren nach einem der vorhergehenden Ansprüche, dadurch gekennzeichnet, daß Tröpfchen eines härtbaren flüssigen Materials in Abständen längs dem Wickelkern abgeschieden werden, um Verankerungsplatten (32) zu härten und zu bilden, wobei die Verankerungsplatten nach dem Härten unter Bildung von gesonderten, provisorischen Partronen abgeschnitten werden, um das Waschen und Trocknen zu erleichtern.

5. Verfahren nach Anspruch 4, dadurch gekennzeichnet, daß das härtbare, flüssige Material ein Harz ist.

9      **0 0 18 734**      10

6. Verfahren nach einem der vorhergehenden Ansprüche, dadurch gekennzeichnet, daß man einen Endverguß-Verteiler (50) um die Enden der semipermeablen Hohlfasern (22) geißt, den Endverguß unter Bildung einer Verteilerfläche (58) abschneidet und die Verteilerfläche zur Abrundung der Enden der Fasern behandelt, die über der Verteilerfläche herausragen.

7. Verfahren nach Anspruch 6, dadurch gekennzeichnet, daß eine härtbare, meniscus-bildende Lösung auf die Verteilerfläche (58) nach dem Abschneiden aufgebracht wird, die zu einem glatten, harten Überzug gehärtet wird.

8. Verfahren nach Anspruch 7, dadurch gekennzeichnet, daß die meniscus-bildende Lösung eine Polyurethanlösung ist.

9. Verfahren nach Anspruch 8, dadurch gekennzeichnet, daß die Polyurethanlösung nicht mehr als 10 Gewichtsprozent Polyurethan enthält und auf die Verteilerfläche (58) in Form eines feinen Sprühnebels (64) aufgebracht wird.

10. Verfahren nach Anspruch 9, dadurch gekennzeichnet, daß die Polyurethanlösung aus etwa 8 Gewichtprozent Polyurethan und etwa 92 Gewichtsprozent flüchtiger Lösungsmittel besteht und wobei die Tröpfchengröße des Sprühnebels (64) im Bereich von 10 bis 20 μm liegt.

11. Stoffaustausch-Vorrichtung, die aus aufeinanderfolgenden Schichten (A, B, C) von Fasern gebildet ist, wobei die Fasern jeder Schicht parallel zueinander jedoch in einem Winkel zu den Fasern der nächsten benachbarten Schicht angeordnet sind, dadurch gekennzeichnet, daß jede Schicht aus wenigstens einem Satz von Fasern (24) besteht, wobei jeder Satz aus wenigstens einer Abstandhalter-Massivfaser (26) und wenigstens einer semipermeablen Hohlfaser (22) besteht, welche nicht dicker ist als die Massivfaser und parallel dazu angeordnet ist.

12. Stoffaustausch-Vorrichtung nach Anspruch 11, dadurch gekennzeichnet, daß die semipermeablen Hohlfasern (22) dünner als die Massivfasern (26) sind.

13. Stoffaustausch-Vorrichtung nach Anspruch 11 oder 12, dadurch gekennzeichnet, daß jeder Satz (24) aus einer Massivfaser (26) und einer Vielzahl von Hohlfasern (22) besteht.

14. Verfahren zur Herstellung einer Blutdialysepatrone, dadurch gekennzeichnet, daß man

a) auf einem mit Öffnungen versehenen Hohlwickelkern (20) Sätze von Fasern (24) wickelt, wobei jeder Satz eine Abstandhalter-Massivfaser (26) und wenigstens eine Dialysehohlfaser (22) umfaßt, die im allgemeinen parallel dazu angeordnet ist,

b) auf die Fasern während des Wickelvorgangs ein härtbares Klebematerial (32) aufbringt, das zum Festhalten der Fasern in einer festen Lage an längs des Wickelkerns beabstandeten Stellen bestimmt ist,

c) daß Klebematerial härten läßt,

d) daß gehärtete Klebematerial an den beabstandeten Stellen (36) durchschneidet, um einzelne provisorische Patronen zu bilden,

e) einen Endverguß der Enden der provisorischen Patronen vornimmt, um sie abdichtend in einem Gehäuse einzupassen,

f) die Endverguß-Enden durchschneidet, um das Klebematerial zu entfernen und die Enden der Fasern in einer Verteilerfläche (58) freizulegen und

g) die freiliegenden Enden der Fasern und die Verteilerfläche mit einer meniscus-bildenden, härtbaren Substanz behandelt, um einen glatte, nicht-thrombogene Oberfläche (66) auf den Faserenden (68) und dem Verteiler zu erzeugen.

15. Verfahren nach Anspruch 14, dadurch gekennzeichnet, daß das Endvergießen zentrifugal erfolgt.

**Revendications**

1. Procédé pour confectionner un dispositif detransfert de masse en enroulant des fibres autour d'un mandrin afin de former une structure multicouches (A, B, C) dans laquelle les fibres de chaque couche sont disposées suivant un certain angle par rapport aux fibres de la couche adjacente suivante, caractérisé en ce que, au moins un groupe (24) desdites fibres est enroulé sur le mandrin, chaque groupe se composant d'une fibre d'espacement pleine (26) et d'au moins une fibre semi-perméable creuse (22) qui n'est pas plus épaisse que ladite fibre d'espacement pleine et est parallèle à ladite fibre d'espacement pleine.

2. Procédé selon la revendication 1, dans lequel lesdits fibres semiperméables creuses (22) sont plus minces que lesdites fibres pleines (26).

3. Procédé selon la revendication 1 ou 2, caractérisé en ce qu'on dépose simultanément et parallèlement les uns aux autres, plusieurs desdits groupes de fibres (24).

4. Procédé selon l'une quelconque des revendications précédentes, caractérisé en ce que des grains d'une matière liquide durcissable sont déposés à intervalles le long dudit mandrin, afin de durcir et de former des plaquettes d'ancrage (32), lesdites plaquettes d'ancrage étant coupés après avoir durci, afin de former des cartouches temporaires individuelles plus faciles à laver et à sécher.

5. Procédé selon la revendication 4, caractérisé en outre en ce que ladite matière durcissable est une résine.

6. Procédé selon l'une quelconque des revendications précédentes, qui comprend les étapes consistant à couler un collecteur final d'enrobage (50) autour des extrémités des fibres semi-perméables creuses (22), à sectionner ledit enrobage pour former une surface collectrice (58) et à traiter ladite surface collectrice de manière à arrondir les extrémités desdites fibres faisant saillie à travers ladite surface collectrice.

7. Procédé selon la revendication 6, caractérisé en ce qu'on applique une solution durcissable formant un ménisque sur ladite surface collectrice (58) après l'avoir coupée et on la cuit pour produire un revêtement dur et lisse.

8. Procédé selon la revendication 7, caractérisé en ce que la solution formant un ménisque est une solution de polyuréthane.

9. Procédé selon la revendication 8, caractérisé en ce que la solution de polyuréthane ne contient pas plus de 10% en poids de polyuréthane et est appliquée à ladite surface collectrice (58) sous la forme d'un jet (64) formant un fin brouillard.

10. Procédé selon la revendication 9, caractérisé en ce que ladite solution de polyuréthane se compose d'environ 8% en poids de polyuréthane et d'environ 92% en poids de solvants volatils, et en ce que les dimensions des gouttelettes dudit jet de pulvérisation (64) sont de l'ordre de 10 à 20 micromètres.

11. Dispositif de transfer de masse composé de couches successives (A, B, C) de fibres, les fibres de chaque couche étant disposées parallèlement les unes aux autres, mais de manière à former un certain angle avec les fibres de la couche adjacent suivante, caractérisé en ce que chaque couche se compose d'au moins un groupe de fibres (24), chaque groupe se composant d'au moins une fibre d'espacement pleine (26) et d'au moins une fibre semi-permeable creuse (22) qui n'est pas plus épaisse que ladite fibre pleine et qui est parallèle à celle-ci.

12. Dispositif de transfer de masse selon la revendication 11, dans lequel lesdites fibres semi-perméables creuses (22) sont plus minces que lesdites fibres pleines (26).

13. Dispositif de transfer de masse selon la revendication 11 ou 12, caractérisé en outre en ce que chaque groupe (24) se compose d'une fibre pleine (26) et de plusieurs fibres creuses (22).

14. Procédé pour produire une cartouche pour la dialyse sanguine comprenant les étapes consistant:

à) à enrouler sur un mandrin creux (20) présentant des ouvertures des groupes de fibres (24), chaque groupe comprenant une fibre d'espacement pleine (26) et au moins une fibre de dialyse creuse (22) pratiquement parallèle à celle-ci;

b) à appliquer auxdites fibres, pendant qu'on les enroule, une matière adhésive durcissable (32) adaptée à tenir lesdites fibres dans une position fixe, en des emplacements espacés le long dudit mandrin;

c) à permettre à ladite matière adhésive de durcir;

d) à sectionner ladite matière adhésive durcie auxdits emplacements espacés (36) afin de former des cartouches temporaires individuelles;

e) à enrober les extrémités desdites cartouches temporaires afin de les introduire dans une enveloppe dans une relation d'étanchéité;

f) à sectionner lesdits extrémités enrobées pour enlever ladite matière adhésive et pour dénuder les extrémités desdites fibres dans une surface collectrice (58); et

g) à traiter lesdites extrémités dénudées desdites fibres et ladite surface collectrice avec une substance durcissable formant un ménisque afin de produire une surface lisse non thrombogène (66) sur les extrémités (68) desdites fibres et du collecteur.

15. Procédé selon la revendication 14, dans lequel ledit enrobage final est effectué par centrifugation.

0 018 734

FIG. 1

FIG. 2

FIG. 3

46

18

50

54

48 40 42

FIG. 4

62

64

6

58

60

FIG. 5

26 22

262B
224B
223B
222B
B
26

221B
261B
C
22

A

24

24

FIG. 7

58 66 68 50 66 66 50 68
58

50

50 22 22 FIG. 6 22 22